# EUROPEAN PATENT APPLICATION

(11) **EP 4 800 666 A1**
(43) Date of publication of application: **02.09.2026**
(21) Application number: 25161129.9
(22) Date of filing: 28.02.2025
(51) Int. Cl.: G06V 20/59

(54) **A COMPUTER-IMPLEMENTED METHOD FOR DETECTING DRIVER DISTRACTION IN A CURRENT TRAFFIC SCENE**

(71) Applicant: TOYOTA JIDOSHA KABUSHIKI KAISHA, Toyota-shi, Aichi-ken, 471-8571 (JP); Glimpse Technology Limited, Bristol BS6 5JH (GB)
(72) Inventor: ABDELKAWY, Hazem, 1140 BRUSSELS (BE); PALMER, Luke, BRISTOL, BS6 5JH (GB); PALASEK, Petar, LONDON, NW6 3NL (GB)
(74) Representative: Cabinet Beau de Loménie

(57) **Abstract**

A computer-implemented method (20) for detecting driver distraction in a current traffic scene, comprising:
- capturing (21) the driver's gaze positions over time;
- constructing (22) a dynamic spatio-temporal heterogeneous graph representation of the current traffic scene;
- executing (23) a graph transformer model which comprises integrating the edges between the nodes of the spatio-temporal heterogeneous graph representation into its attention mechanism;
- updating (24) the nodes of the current spatio-temporal heterogeneous graph representation;
- processing (25) the updated nodes of the spatio-temporal heterogeneous graph representation to estimate a probability distribution of the driver's next gaze position; and
- detecting (26) driver distraction by comparing the current captured gaze position with the estimated probability distribution to identify deviations indicative of the driver distraction.

## Description

### BACKGROUND OF THE INVENTION

### 1. Field of the invention

The present disclosure relates to the field of automotive safety systems and, more particularly, to an apparatus and a method for detecting driver distraction in a current traffic scene.

### 2. Description of Related Art

Increased traffic density on the roads necessitates that vehicle drivers maintain continuous and undivided attention to their surroundings. However, human capacity for sustained concentration is inherently limited, often leading to lapses in attention and critical driving errors.

Statistically, human error is implicated in approximately 94% of road accidents, largely due to factors like driver inattention, distractions, and insufficient situational awareness.

To address this, Advanced Driver Assistance Systems (ADAS) have been developed to reduce cognitive load on drivers, employing sensors such as cameras, LiDAR, and radar to monitor the vehicle's external environment. These sensors provide real-time data on the surroundings, enabling the system to identify potential hazards, such as vehicles, pedestrians, and obstacles. Using machine learning models, ADAS classifies these detected objects into predefined categories and determines the appropriate response - whether that involves autonomous actions, such as automatic braking, or issuing warnings through visual, audio, or haptic feedback to alert the driver.

However, one of the primary challenges with current ADAS technology is its limited ability to accurately recognize driver distraction which can come from a variety of sources; including both internal (e.g., fatigue or cognitive strain) and external (e.g., interactions with passengers or mobile devices) factors.

While ADAS systems excel at detecting and responding to external hazards, they often overlook a critical internal factor: the driver's level of attention. Thus, even when ADAS accurately identifies obstacles or road conditions, if the driver is distracted, their response may be delayed or ineffective, increasing the risk of accidents. Accordingly, recognizing driver distraction is essential, as it directly impacts road safety.

To address this gap, integrating monitoring systems which utilize in-vehicle cameras and sensors to track the driver's gaze is important to identify moments of distraction. The need for such an integration is particularly urgent as vehicles progress toward higher levels of automation (levels 2-4), where the driver may not always be fully engaged with driving tasks.

Without robust monitoring of the driver's attention, even the most advanced ADAS could fail in situations where quick human intervention is needed. Therefore, there is a need to incorporate distraction recognition capabilities to ensure timely interventions, maintaining safety in increasingly complex driving environments.

### SUMMARY

The object of the present invention is to at least substantially address the aforementioned drawbacks. In this respect, the aim of the invention is to provide a computer-implemented method for detecting driver distraction in a current traffic scene, comprising:
- capturing the driver's gaze positions over time;
- constructing a dynamic spatio-temporal heterogeneous graph representation of the current traffic scene, wherein nodes represent traffic-relevant elements of the current traffic scene, the driver's gaze, and the drivable area, and wherein edges encode spatial and temporal relationships between the nodes, with the spatio-temporal relationships evolving over time to capture the dynamic nature of the scene;
- executing a graph transformer model which comprises integrating the edges between the nodes of the spatio-temporal heterogeneous graph representation into its attention mechanism;
- updating the nodes of the current spatio-temporal heterogeneous graph representation;
- processing the updated nodes of the spatio-temporal heterogeneous graph representation to estimate a probability distribution of the driver's next gaze position; and
- detecting driver distraction by comparing the current captured gaze position with the estimated probability distribution to identify deviations indicative of the driver distraction.

This invention aims to improve the detection of driver distraction by addressing certain limitations in current systems.

The method begins by tracking the driver's gaze positions continuously as they drive. This is done using, for example, sensors such as in-vehicle cameras or tracking devices that can monitor where the driver is looking at any given moment. These gaze positions are recorded as time-series data, capturing the movement of the driver's eyes over time.

Once the driver's gaze data is collected, a dynamic spatio-temporal heterogeneous graph representation of the current traffic scene is constructed. This graph comprises nodes and edges that encode both spatial and temporal relationships between various elements in the scene. The nodes include traffic-relevant elements (e.g., other vehicles, pedestrians, traffic signs, lane markings), the driver's gaze position, and the drivable area (permissible driving space).

Edges in the graph capture spatial relationships (e.g., proximity of objects to each other) and temporal relationships (e.g., changes in object positions over time). The dynamic nature of the graph ensures that the representation evolves as the traffic scene changes, enabling accurate modeling of real-world driving conditions.

A graph transformer model is applied to process the spatio-temporal heterogeneous graph. This model integrates the edges of the graph into its attention mechanism, allowing it to selectively focus on relevant relationships between nodes. The attention mechanism ensures that dynamic interactions in the traffic scene are properly weighted based on their importance. This step is advantageous for learning complex dependencies and extracting meaningful patterns from the structured graph representation, thereby improving the accuracy of driver attention prediction.

Following the application of the graph transformer model, the nodes within the spatio-temporal heterogeneous graph are updated. The update process adjusts node attributes to reflect newly inferred relationships and predictions about how the traffic scene is evolving. This dynamic update ensures that the model maintains an up-to-date understanding of the environment, incorporating the latest gaze information and spatial-temporal dependencies.

With the updated graph, the next step is to estimate a probability distribution for the driver's next gaze position. This estimation is performed by leveraging learned patterns from historical gaze behavior and contextual scene information. The resulting probability distribution represents the expected regions where the driver's attention should naturally shift, given the current traffic dynamics. This predictive capability enables proactive identification of deviations from normal gaze behavior.

Finally, driver distraction is detected by comparing the real-time captured gaze position with the estimated probability distribution. Significant deviations between the expected and actual gaze positions indicate potential driver distraction. For instance, if the driver's gaze frequently shifts away from critical traffic elements or remains fixed in an unusual area for an extended period, the system can flag a distraction event.

Optionally, the computer-implemented method further comprises triggering an alert if the deviation exceeds a predefined threshold, indicating driver distraction.

After detecting deviations in the driver's gaze behavior relative to the expected gaze probability distribution, the method evaluates the magnitude of these deviations. A deviation occurs when the driver's gaze significantly differs from the predicted or expected focus areas based on the current traffic scene.

All the gaze deviations may not be treated equally. To avoid for example false positives (e.g., minor, non-critical gaze shifts), the method uses a predefined threshold to determine what constitutes a significant deviation. This threshold can be calibrated based on various factors, such as driving speed, road conditions, or the critical nature of the detected objects. For instance, on a busy highway, even small deviations might be important, whereas on an empty rural road, the system might tolerate larger deviations without triggering an alert.

If the deviation between the estimated probability distribution and the actual gaze position exceeds the predefined threshold, this suggests a high likelihood that the driver is distracted. The deviation is then considered significant enough to warrant concern.

An alert is triggered to indicate driver distraction. This alert can take various forms, such as an auditory warning, visual notification, or haptic feedback, aimed at re-engaging the driver's attention on the road. In other words, the purpose of the alert is to prompt the driver to refocus on the driving task and relevant traffic conditions, potentially preventing accidents. In some cases, the alert may escalate if the distraction persists, or the system could take additional preventive actions, such as slowing the vehicle in automated driving scenarios.

A person skilled in the art is fully capable of technically defining this threshold by considering the expected probability distribution while accounting for variables such as driving speed, road conditions, and object criticality.

Optionally, the traffic-relevant elements comprise at least vehicles, pedestrians, or static objects.

Optionally, the driver's gaze in the current traffic scene is represented by a dynamic node that captures the driver's foveated field of view.

The foveated field of view refers to the specific region within the driver's visual field where their gaze is directed with the highest visual acuity. While the driver is aware of peripheral elements in the scene, only the objects within the foveated field of view receive focused visual attention and detailed cognitive processing. Accordingly, this node not only tracks the position of the driver's gaze but also captures the dynamic shift of visual focus over time.

Optionally, the drivable area indicates the practicable driving zone in the current traffic scene.

The practicable driving zone refers to the portion of the road that is legally and physically suitable for vehicle movement within the current traffic scene. This zone encompasses lanes designed for driving, areas free of static obstacles, and regions that comply with traffic regulations.

Optionally, the probability distribution of the driver's next gaze position is modeled as a Gaussian mixture, with each component representing a distinct node within the spatio-temporal heterogeneous graph.

The driver's gaze behavior is inherently uncertain and influenced by multiple factors in the driving environment. Accordingly, the probability distribution of the driver's next gaze position is modeled as a Gaussian mixture model (GMM), a probabilistic approach that represents the distribution as a weighted sum of multiple Gaussian component. Each Gaussian component corresponds to a distinct node within the spatio-temporal heterogeneous graph, meaning that the driver's gaze is likely to shift towards specific elements based on their relevance and spatio-temporal context. The GMM allows for a more flexible representation of this uncertainty by modeling gaze transitions as a probabilistic combination of several possible fixation points.

Optionally, the computer-implemented method further comprises simulating a predicted gaze trajectory over the current traffic scene by sampling from the Gaussian mixture model.

The computer-implemented method thus creates a virtual path that represents where a driver's gaze is likely to move. To this end, the computer-implemented method estimates where a driver is likely to look based on probabilistic distributions.

Optionally, detecting driver distraction is performed in real-time or over a predetermined period of time.

Real-time detection allows for immediate assessment of the driver's attention, enabling quick interventions if necessary. Alternatively, analyzing distraction over a set duration provides insights into longer-term patterns of inattention. This flexibility ensures that the method can be adapted to different use cases, from instant safety alerts to broader behavioral analysis. For instance, analyzing distraction over a longer period can be used for training drivers by reviewing recorded footage and providing feedback on their attention patterns. This approach allows for post-drive assessments, helping drivers recognize moments of inattention and improve their awareness over time. Such insights can be valuable for driver education programs or advanced driver assistance systems aimed at enhancing road safety.

The present disclosure further relates to a computer program set including instructions for executing the steps of the above-described computer-implemented method when said program set is executed by at least one computer.

This program set can use any programming language and take the form of source code, object code, or a code intermediate between source code and object code, such as a partially compiled form or any other desirable form.

The present disclosure further relates to a recording medium readable by at least one computer and having recorded thereon at least one computer program including instructions for executing the steps of the above-described computer-implemented method.

The present disclosure further relates to an apparatus for detecting driver distraction in a current traffic scene, comprising:
- a capturing module configured to capture the driver's gaze positions over time;
- a constructing module configured to construct a dynamic spatio-temporal heterogeneous graph representation of the current traffic scene, wherein nodes represent traffic-relevant elements of the current traffic scene, the driver's gaze, and the drivable area, and wherein edges encode spatial and temporal relationships between the nodes, with the spatio-temporal relationships evolving over time to capture the dynamic nature of the scene;
- an executing module configured to execute a graph transformer model which comprises integrating the edges between the nodes of the spatio-temporal heterogeneous graph representation into its attention mechanism;
- an updating module configured to update the nodes of the current spatio-temporal heterogeneous graph representation;
- a processing module configured to process the updated nodes of the spatio-temporal heterogeneous graph representation to estimate a probability distribution of the driver's next gaze position; and
- a detecting module configured to detect driver distraction by comparing the current captured gaze position with the estimated probability distribution to identify deviations indicative of the driver distraction.

The apparatus referred to hereinafter as the detecting apparatus, may be configured to carry out the above-mentioned method (referred to hereinafter as the detecting method) and may have part or all of the above-described features. The determining apparatus may have the hardware structure of a computer.

Optionally, the capturing module is an in-vehicle camera or an eye-tracking system.

By employing an in-vehicle camera, the apparatus captures video footage of the driver's face and eye movements, enabling the analysis of gaze patterns in relation to the surrounding traffic scene. On the other hand, an eye-tracking system enhances this capability by utilizing advanced sensors and algorithms specifically designed to detect and measure the precise location of the driver's gaze.

The present disclosure further relates to a vehicle comprising an apparatus as described above.

The term "vehicle" may be directed to an apparatus capable of transporting people from one location to another, such as a car or a motorcycle.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- FIG. 1 is a block diagram of a detecting apparatus according to an embodiment of the present disclosure; and
- FIG.2 is a flowchart of a detecting method according to an embodiment of the present disclosure.

### DETAILED DESCRIPTION OF EMBODIMENTS

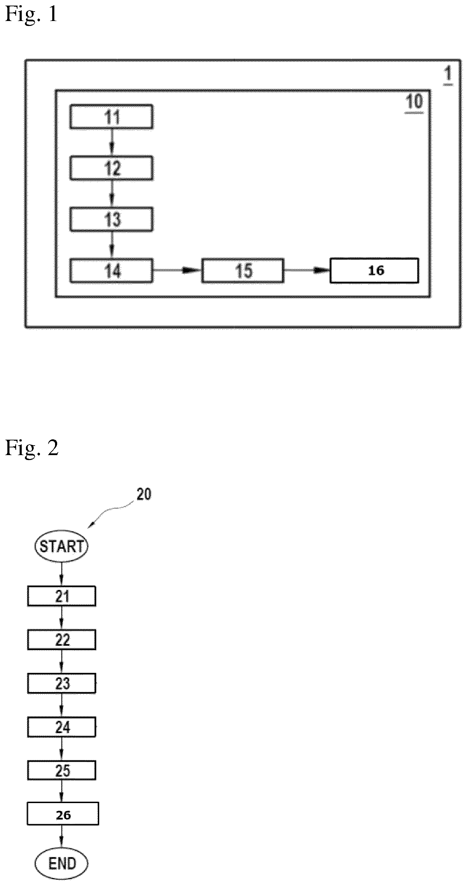

Figure 1 shows a block diagram of a detecting apparatus 10 comprising a capturing module 11, a constructing module 12, an executing module 13, an updating module 14, a processing module 15, and a detecting module 16,. The detecting apparatus 10 may be located inside a vehicle 1 which may be, without limitation, an autonomous or semi-autonomous vehicle. Such vehicle 1 may be directed to an apparatus capable of transporting people or objects from one location to another, such as a car or a motorcycle, and may be categorized into different levels based on the extent of automation and human involvement in the driving tasks.

Alternatively, the detecting apparatus 10 may be partially located outside the vehicle 1. As a first example, functions of the constructing module 12 or the executing module 13, are executed via cloud computing. As a second example, only functions of the constructing module 12 are executed via cloud computing. Accordingly, the functions of the capturing module 11, the updating module 14, and the processing module 15 are executed inside the vehicle 1.

The detecting module 10 may be configured to detect driver distraction in a current traffic scene.

The detecting module 10 may comprise an electronic circuit, a processor (shared, dedicated, or group), a combinational logic circuit, a memory that executes one or more software programs, and/or other suitable components that provide the described functionality. In other words, the detecting apparatus 10 may be a computer device. The detecting apparatus 10 may be connected to a memory, which may store data, e.g., at least one computer program, which, when executed, carries out the detecting method according to the present disclosure.

For example, the memory can be a ROM (for "Read Only Memory"), a CD ROM, a microelectronic circuit ROM, or in the form of magnetic storage means, for example, a diskette (floppy disk), a flash disk, a SSD (for "Solid State Drive") or a hard disk. Alternatively, the memory can be an integrated circuit in which the program is incorporated, the circuit being adapted to execute the detecting method or to be used in its execution.

The capturing module 11 is a module configured to capture the driver's gaze positions over time. This module 11 is designed to continuously monitor and capture data on where the driver is looking, allowing for real-time input on gaze direction and duration, which is advantageous for assessing attention and detecting potential distraction.

The capturing module 11 may be an in-vehicle camera or an eye tracking system, or any other device capable of tracking the driver's gaze position over time.

The constructing module 12 is a module configured to construct a dynamic spatio-temporal heterogeneous graph representation of the current traffic scene, wherein nodes represent traffic-relevant elements of the current traffic scene, the driver's gaze, and the drivable area, and wherein edges encode spatial and temporal relationships between the nodes, with the spatio-temporal relationships evolving over time to capture the dynamic nature of the scene.

The historical gaze positions data may be incorporated in the spatio-temporal graph by connecting gaze nodes across multiple timeframes.

This graph comprises nodes and edges that encode both spatial and temporal relationships between various elements in the scene. The nodes include traffic-relevant elements (e.g., other vehicles, pedestrians, traffic signs, lane markings), the driver's gaze position, and the drivable area (permissible driving space).

Edges in the graph capture spatial relationships (e.g., proximity of objects to each other) and temporal relationships (e.g., changes in object positions over time). The dynamic nature of the graph ensures that the representation evolves as the traffic scene changes, enabling accurate modeling of real-world driving conditions.

As explained above, each gaze position at a specific moment is represented as a node, and these nodes are linked together in the graph to form a continuous sequence over time. This allows capturing the temporal flow of the driver's attention, showing how it moves from one point in the scene to another as the traffic environment evolves.

By connecting these gaze nodes across timeframes, the system can analyze patterns in the driver's gaze behavior, such as how long their attention lingers on certain objects or how quickly it shifts between different areas of the scene.

This temporal linking is advantageous for detecting deviations from expected gaze patterns, as it highlights moments where the driver's attention may have wandered from relevant objects or areas.

The constructing module 12 may be implemented as software running on the detecting apparatus 10 or may be implemented partially as a hardware element of the detecting apparatus 10.

The executing module 13 is a module configured to execute a graph transformer model which comprises integrating the edges between the nodes of the spatio-temporal heterogeneous graph representation into its attention mechanism.

In other words, a graph transformer model is applied to process the spatio-temporal heterogeneous graph. This model integrates the edges of the graph into its attention mechanism, allowing it to selectively focus on relevant relationships between nodes. The attention mechanism ensures that dynamic interactions in the traffic scene are properly weighted based on their importance. It is advantageous for learning complex dependencies and extracting meaningful patterns from the structured graph representation, thereby improving the accuracy of driver attention prediction.

It should be noted that the executing module 13 may be implemented as software running on the detecting apparatus 10. The executing module 13 may also be implemented partially as a hardware element of the detecting apparatus 10.

The updating module 14 is a module configured to update the nodes of the current spatio-temporal heterogeneous graph representation.

Accordingly, following the application of the graph transformer model, the nodes within the spatio-temporal heterogeneous graph are updated. The updating module 14 adjusts node attributes to reflect newly inferred relationships and predictions about how the traffic scene is evolving. This dynamic update ensures that the model maintains an up-to-date understanding of the environment, incorporating the latest gaze information and spatial-temporal dependencies.

The updating module 14 may be implemented as software running on the detecting apparatus 10. The updating module 14 may also be implemented partially as a hardware element of the detecting apparatus 10.

The processing module 15 is a module configured to process the updated nodes of the spatio-temporal heterogeneous graph representation to estimate a probability distribution of the driver's next position.

With the updated graph, the processing module 15 estimates a probability distribution for the driver's next gaze position. This estimation is performed by leveraging learned patterns from historical gaze behavior and contextual scene information. The resulting probability distribution represents the expected regions where the driver's attention should naturally shift, given the current traffic dynamics. This predictive capability enables proactive identification of deviations from normal gaze behavior.

The processing module 15 may be implemented as software running on the detecting apparatus 10. The processing module 15 may also be implemented partially as a hardware element of the detecting apparatus 10.

The detecting module 16 is a module configured to detect driver distraction by comparing the current captured gaze position with the estimated probability distribution to identify deviations indicative of the driver distraction.

The detecting module 16 thus compares the real-time captured gaze position with the estimated probability distribution. Significant deviations between the expected and actual gaze positions indicate potential driver distraction. For instance, if the driver's gaze frequently shifts away from critical traffic elements or remains fixed in an unusual area for an extended period, the system can flag a distraction event.

The detecting module 16 may be implemented as software running on the detecting apparatus 10. The detecting module 16 may also be implemented partially as a hardware element of the detecting apparatus 10.

The tasks carried out by the detecting apparatus 10 are detailed hereinafter with respect to the corresponding detecting method, an embodiment of which is illustrated in Fig. 2.

Figure 2 is a flowchart of the detecting method 20 according to an embodiment of the present disclosure. The detecting method 20 is a method for detecting driver distraction in the current traffic scene.

The detecting method 20 comprises a step 21 of capturing the driver's gaze positions over time. Such step 21 is performed by the capturing module 11.

That is, the detecting method 20 further comprises a step 22 of constructing a dynamic spatio-temporal heterogeneous graph representation of the current traffic scene, wherein nodes represent traffic-relevant elements of the current traffic scene, the driver's gaze, and the drivable area, and wherein edges encode spatial and temporal relationships between the nodes, with the spatio-temporal relationships evolving over time to capture the dynamic nature of the scene. The step 22 is performed by the constructing module 12.

The driver's gaze in the current traffic scene is represented by a dynamic node that captures the driver's foveated field of view.

The foveated field of view refers to the specific region within the driver's visual field where their gaze is directed with the highest visual acuity. While the driver is aware of peripheral elements in the scene, only the objects within the foveated field of view receive focused visual attention and detailed cognitive processing. Accordingly, this node not only tracks the position of the driver's gaze but also captures the dynamic shift of visual focus over time.

The drivable area indicates the practicable driving zone in the current traffic scene. The practicable driving zone refers to the portion of the road that is legally and physically suitable for vehicle movement within the current traffic scene. This zone encompasses lanes designed for driving, areas free of static obstacles, and regions that comply with traffic regulations.

The traffic-relevant elements comprise at least vehicles, pedestrians, or static objects.

To this end and for instance, a sequence of T input frames is represented, I= [I₁,..., I_{T}], by the spatio-temporal heterogeneous scene graph G. The heterogeneous graph is defined as a directed graph 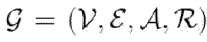 , where 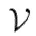 denotes the set of notes, 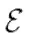 denotes the set of edges, each node *v* ∈ 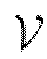 is assigned a note type τ(v) : 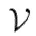 ↦ 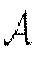 , and each edge e ∈ 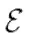 is assigned an edge type *ϕ*(e) ↦ 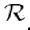 .

To refer to an edge from node vⱼ to node vᵢ, e_{vj→vi} is used.

Each node feature vector x includes the 2D position (bounding box centre), bounding box shape, detection score, appearance vector, depth estimate and one-hot label encoding. A central bias node including information about the drivable area in frame It is introduced into the graph at each timestep, with its bounding box shape set to the input image's shape (which is the current traffic scene).

Regarding the edges, two categories of edges are defined: spatial, connecting nodes within the same timestep t, and temporal, connecting nodes across different timesteps, all node pairs (vᵢ, vⱼ) are connected by two directed spatial edges, e_{vj→vi} and e_{vi→vj}, modelling interactions in both directions.

Temporal edges connect nodes from past to future timesteps. Nodes are connected temporally if their timestep difference is included in a predefined set 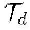 .

The type of each edge is defined by a triplet formed of source node type, edge category, and the destination node type: *ϕ*(e_{vⱼ→vᵢ}) := (τ(*vⱼ*),*C*(e_{vⱼ→vᵢ}),τ(vᵢ)) ,where C(e_{vⱼ→vᵢ}) ∈ {spatial,temporal}.

Each edge is assigned a feature vector a_{i,j} modelling a generalised affinity between nodes vⱼ and vᵢ across space, time and appearance. This vector includes differences in 3D position (2D and depth), timestep differences, and cosine similarity between the appearance representations of the destination and source nodes. Edges between gaze nodes and object nodes allow the flow of information about objects previously attended to, objects attended to at timestep t, and objects to be attended next.

The detecting method 20 further comprises a step 23 of executing a graph transformer model which comprises integrating the edges between the nodes of the spatio-temporal heterogeneous graph representation into its attention mechanism. This step 23 is performed by the executing module 13.

The attention function is implemented as a heterogeneous mutual attention with node and edge-type-specific parameters. For a single head, there is : $a \left({x}_{i}, {x}_{j}\right) = {ξ}_{j} \left(\frac{{Q}_{i} {K}_{j}^{T}}{\sqrt{d}}\right) ,$ where the query vector Qᵢ is defined as : ${Q}_{i} = {x}_{i} {W}_{Q}^{τ} + {b}_{Q}^{τ} ,$ and the key vector Kⱼ is: ${K}_{j} = \left({x}_{j}{W}_{K}^{τ}+{b}_{K}^{τ}\right) {W}_{K}^{ϕ} .$ ${W}_{Q}^{τ}$ and ${W}_{K}^{τ}$ are target node-type specific query and key linear mappings, ${b}_{Q}^{τ}$ and ${b}_{K}^{τ}$ are source node-type-specific biases, ${W}_{K}^{ϕ}$ is an edge-type-specific linear mapping, d is the dimension of the Qᵢ and Kⱼ vectors, and ξⱼ is the soft-max function across all choices of*j.*

The output of the message function ψ(xᵢ, xⱼ) in the graph transformer is the value vector Vⱼ: ${V}_{j} = ψ \left({x}_{i}, {x}_{j}\right) = \left({x}_{j}{W}_{V}^{τ}+{b}_{V}^{τ}\right) {W}_{V}^{ϕ} ,$ where ${W}_{V}^{τ}$ is a source node-type specific value linear map, ${b}_{V}^{τ}$ is a source node-type-specific bias, and ${W}_{V}^{ϕ}$ is an edge-type-specific linear map, i.e. depending on *ϕ*(e_{vⱼ→vᵢ})

The aggregation operator in the graph transformer is the sum operator: ${{x}^{˜}}_{i}^{′} = {\sum }_{j ∈ {N}_{i}} {ξ}_{j} \left(\frac{{Q}_{i} {K}_{j}^{T}}{\sqrt{d}}\right) {V}_{j} ,$

The detecting method 20 further comprises a step 24 of updating the nodes of the current spatio-temporal heterogeneous graph representation. The step 24 is performed by the updating module 14.

The update function is implemented by passing the vector ${{x}^{˜}}_{i}^{′}$ through a nonlinear function σ and a linear mapping, and includes a parameterised skip connection and the updated node vector ${x}_{i}^{′}$ can be written as: ${x}_{i}^{′} = {λ}_{ART}^{τ} {{x}^{˜}}_{i}^{′} + \left(1-{λ}_{ART}^{τ}\right) {x}_{i} ,$ where ${λ}_{ART}^{τ}$ denotes the node type specific learnable parameter controlling the strength of the skip connection, $0 \leq {λ}_{ART}^{τ} \leq 1$ is the initial value of the target node feature vector.

Further, the detecting method 20 comprises a step 25 of processing the updated nodes of the spatio-temporal heterogeneous graph representation to estimate a probability distribution of the driver's next gaze position. The step 25 is performed by the processing module 15.

The probability distribution of the driver's next gaze position is modeled as a Gaussian mixture, with each component representing a distinct node within the spatio-temporal heterogeneous graph.

As explained above, the driver's gaze behavior is inherently uncertain and influenced by multiple factors in the driving environment. Accordingly, the probability distribution of the driver's next gaze position is modeled as a Gaussian mixture model (GMM), a probabilistic approach that represents the distribution as a weighted sum of multiple Gaussian component. Each Gaussian component corresponds to a distinct node within the spatio-temporal heterogeneous graph, meaning that the driver's gaze is likely to shift towards specific elements based on their relevance and spatio-temporal context. The GMM allows for a more flexible representation of this uncertainty by modeling gaze transitions as a probabilistic combination of several possible fixation points.

To this end, the GMM comprises *K* = | 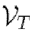 | components; the parameters of the k-th component, [Δx̂ₖ, Δ*ŷₖ,* σ̂_{xₖ}, σ̂_{yₖ}, *ρ̂ₖ,* π̂*ₖ*], are estimated by a heterogeneous linear layer from the updated feature vector ${x}_{i}^{′}$.

The mixing weights πₖ satisfy 0 ≤ *π*ₖ ≤ 1 and Σπ*ₖ* = 1 by passing π̂*ₖ* through softmax, limit the correlation values ρₖ to [-1, 1] with ρ*ₖ* = tanh(ρ̂ₖ), and ensure positive standard deviations by *σₖ* = exp([σ̂_{xₖ},σ̂_{yₖ}]).

The mean vector µₖ is the position of node vₖ in the image plane, ${μ}_{k}^{0}$, offset by Δ*µₖ* = [Δ*xₖ,Δyₖ*].

Offsets are constrained to [-Δ_{max,} Δₘₐₓ] with Δ*µₖ* = Δₘₐₓ · tanh(Δ*µ̂ₖ*), with Δₘₐₓ = 0.05 for each node type, except the central bias node (which is the drivable area node).

The future gaze position probability distribution is then: $p \left(\left(x, y\right)\right) = {\sum }_{k = 1}^{K} {π}_{k} N \left(\left(x, y\right)\left|{μ}_{k}, {σ}_{k}, {ρ}_{k}\right.\right) .$

Finally, the detecting method 20 comprises a step 26 of detecting driver distraction by comparing the current captured gaze position with the estimated probability distribution to identify deviations indicative of the driver distraction. This step 26 is performed by the detecting module 16.

The detecting method 20 may comprise an optional step of triggering an alert if the deviation exceeds a predefined threshold, indicating driver distraction. This step may be performed by an optional module of the detecting apparatus 10, for example an alert module.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense. Of course, the invention is not limited to the field of driving assistance systems but can be used in any field where detection of human's distraction is required.

## Claims

1. A computer-implemented method (20) for detecting driver distraction in a current traffic scene, comprising:
- capturing (21) the driver's gaze positions over time;
- constructing (22) a dynamic spatio-temporal heterogeneous graph representation of the current traffic scene, wherein nodes represent traffic-relevant elements of the current traffic scene, the driver's gaze, and the drivable area, and wherein edges encode spatial and temporal relationships between the nodes, with the spatio-temporal relationships evolving over time to capture the dynamic nature of the scene;
- executing (23) a graph transformer model which comprises integrating the edges between the nodes of the spatio-temporal heterogeneous graph representation into its attention mechanism;
- updating (24) the nodes of the current spatio-temporal heterogeneous graph representation;
- processing (25) the updated nodes of the spatio-temporal heterogeneous graph representation to estimate a probability distribution of the driver's next gaze position; and
- detecting (26) driver distraction by comparing the current captured gaze position with the estimated probability distribution to identify deviations indicative of the driver distraction.

2. The computer-implemented method (20) according to claim 1, further comprising triggering an alert if the deviation exceeds a predefined threshold, indicating driver distraction.

3. The computer-implemented method (20) according to claim 1 or 2, wherein the traffic-relevant elements comprise at least vehicles, pedestrians, or static objects.

4. The computer-implemented method (20) according to any one of claims 1 to 3, wherein the driver's gaze in the current traffic scene is represented by a dynamic node that captures the driver's foveated field of view.

5. The computer-implemented method (20) according to any one of claims 1 to 4, wherein the drivable area indicates the practicable driving zone in the current traffic scene.

6. The computer-implemented method (20) according to any one of claims 1 to 5, wherein the probability distribution of the driver's next gaze position is modeled as a Gaussian mixture, with each component representing a distinct node within the spatio-temporal heterogeneous graph.

7. The computer-implemented method (20) according to claim 6, further comprising simulating a predicted gaze trajectory over the current traffic scene by sampling from the Gaussian mixture model.

8. The computer-implemented method (20) according to any one of claims 1 to 7, wherein detecting driver distraction is performed in real-time or over a predetermined period of time.

9. A computer program set including instructions for executing the steps of the computer-implemented method (20) of any one of claims 1 to 8 when said program set is executed by at least one computer.

10. A recording medium readable by at least one computer and having recorded thereon at least one computer program including instructions for executing the steps of the method of any one of claims 1 to 8.

11. An apparatus (10) for detecting driver distraction in a current traffic scene, comprising:
- a capturing module (11) configured to capture the driver's gaze positions over time;
- a constructing module (12) configured to construct a dynamic spatio-temporal heterogeneous graph representation of the current traffic scene, wherein nodes represent traffic-relevant elements of the current traffic scene, the driver's gaze, and the drivable area, and wherein edges encode spatial and temporal relationships between the nodes, with the spatio-temporal relationships evolving over time to capture the dynamic nature of the scene;
- an executing module (13) configured to execute a graph transformer model which comprises integrating the edges between the nodes of the spatio-temporal heterogeneous graph representation into its attention mechanism;
- an updating module (14) configured to update the nodes of the current spatio-temporal heterogeneous graph representation;
- a processing module (15) configured to process the updated nodes of the spatio-temporal heterogeneous graph representation to estimate a probability distribution of the driver's next gaze position; and
- a detecting module (16) configured to detect driver distraction by comparing the current captured gaze position with the estimated probability distribution to identify deviations indicative of the driver distraction.

12. The apparatus (10) according to claim 11, wherein the capturing module (11) is an in-vehicle camera or an eye-tracking system.

13. A vehicle (1) comprising an apparatus (10) according to claim 11 or 12.
